# EUROPEAN PATENT APPLICATION

(11) **EP 4 279 321 A1**
(43) Date of publication of application: **22.11.2023**
(21) Application number: 22174116.8
(22) Date of filing: 18.05.2022
(51) Int. Cl.: B60L 8/00, B60L 53/51, B60L 58/12, B60L 58/13, B60L 58/14, B60L 58/15, B60L 58/26, B60L 58/27, B60K 16/00, B60L 1/02, B60L 1/00

(54) **METHOD FOR OPERATING A VEHICLE INCLUDING A PV ARRANGEMENT BY USING PV GENERATED ELECTRICITY FOR THERMALISING A BATTERY ARRANGEMENT**

(71) Applicant: Sono Motors GmbH, 80935 München (DE)
(72) Inventor: BEYFUSS, Bastian, 80636 Munich (DE); STOCKS, Oliver, 80636 Munich (DE)
(74) Representative: Qip Patentanwälte Dr. Kuehn & Partner mbB

(57) **Abstract**

A method for operating a vehicle (1) is proposed. The vehicle (1) includes a photovoltaic arrangement (3) provided on a vehicle body (25), a battery arrangement (7) configured for storing electrical energy generated by the photovoltaic arrangement (3), a controller (9) and a thermalising device (11) configured for heating and/or cooling the battery arrangement (7). The method comprises directly supplying electrical energy generated by the photovoltaic arrangement (3) to the thermalising device (11) for thermalising the battery arrangement (7).

Accordingly, for example in situations of a fully charged battery arrangement (7), electricity generated by the PV arrangements (3) may be used for thermalising the battery arrangement (7) into an optimum operation temperature range and/or for utilizing the thermal mass of the battery arrangement (7) for storing thermal energy which may e.g. later be used for heating or cooling an interior volume (31) of the vehicle (1).

## Description

### FIELD OF THE INVENTION

The present invention relates to a method for operating a vehicle including a photovoltaic arrangement provided on a vehicle body (wherein the term "photovoltaic" may be abbreviated by "PV"). Furthermore, the application relates to a vehicle being configured to operate in accordance with the proposed method, to a computer program product for implementing the proposed method and to a computer readable medium storing such computer program product.

### TECHNICAL BACKGROUND

Vehicles have been developed comprising a PV arrangement integrated to or attached to a vehicle body. Such vehicle may be for example a car, a truck, a bus, a mobile home, a train, a ship, and airplane, etc. A vehicle including an integrated PV arrangement may also be referred to as PV integrated vehicle. Particularly, electrically driven vehicles including PV integration may be referred to as solar electric vehicle (SEV). PV integrated vehicles may comprise a multiplicity of solar cells arranged at one or preferably various surfaces along a vehicle body. For example, the present applicant has proposed covering a significant portion of the overall vehicle body with solar cells, thereby providing electric energy to be used in the vehicle itself e.g. for driving the vehicle, to be stored in a vehicle battery and/or to be supplied to external consumers. Therein, the solar cells are integrated into various vehicle body parts. An example of a vehicle body part and of a method for producing such vehicle body part is disclosed in WO 2019/020718 A1. Furthermore, a method for fabricating a curved PV module including adapted positioning of PV cells for integration into a vehicle body part has been described by the present applicant in WO 2021/260024 A1. Details described in the applicant's prior applications may be used in or transferred to embodiments of the invention described herein and the full content of such applications shall be incorporated herein by reference.

Generally, electricity generated by the PV arrangement of a PV integrated vehicle is either stored in the battery arrangement of the vehicle or is directly supplied to a motor for driving the vehicle. As another alternative, such electricity may be supplied to an air-conditioning system of the vehicle or to an external consumer being electrically connected to the vehicle.

WO 2010/083460 A1 discloses solar power charge and distribution for a vehicle.

However, there may be situations in which energy generated by the PV arrangement is not used in a satisfying manner.

### SUMMARY OF THE INVENTION AND OF EMBODIMENTS

There may be a need for improving the usage of electricity generated by the PV arrangement in a PV integrated vehicle.

Such need may be met with the subject-matter of the independent claims. Advantageous embodiments are defined in the dependent claims and described in the following specification and visualised in the associated figures.

According to a first aspect of the present invention, a method for operating a vehicle is proposed. The vehicle includes a photovoltaic arrangement provided on a vehicle body, a battery arrangement configured for storing electrical energy generated by the photovoltaic arrangement and a thermalising device configured for heating and/or cooling the battery arrangement. The method comprises directly supplying electrical energy generated by the photovoltaic arrangement to the thermalising device for thermalising the battery arrangement.

According to a second aspect of the invention, a vehicle comprises a photovoltaic arrangement provided on a vehicle body, a battery arrangement configured for storing electrical energy generated by the photovoltaic arrangement, a thermalising device configured for heating and/or cooling the battery arrangement and a controller electrically connected to the photovoltaic arrangement. The controller is configured for at least one of implementing and controlling the method according to an embodiment of the first aspect of the invention.

According to a third aspect of the invention, a computer program product is proposed. The computer program product includes instructions which, when executed by a processor, instruct the processor to implement or control the method according to an embodiment of the first aspect of the invention.

According to a fourth aspect of the invention, a computer readable medium comprising stored thereon such computer program product is proposed.

Briefly summarised and without limiting the scope of the invention, basic ideas underlying embodiments of the invention and associated possible advantages will be roughly described as follows:
It has been observed that there may be situations in which electricity generated by the PV arrangement of a PV integrated vehicle may neither be stored in the vehicle's battery arrangement, for example due to the battery arrangement being fully charged, nor is the electricity required to be supplied to another electric consumer such as an external electric device. Conventionally, the PV arrangement had been deactivated in such situations. As an alternative, it is suggested herein to use the electricity generated by the PV arrangement for thermalising the battery arrangement. Particularly, the battery arrangement may be preheated or pre-cooled. By such thermalising, the battery arrangement may be brought into a temperature condition which may be beneficial for its operation and/or its service life. Additionally or alternatively, the battery arrangement having a significance thermal mass may be used for temporarily generating a temperature difference between the battery arrangement and for example an interior volume of the vehicle and such temperature difference may later be used e.g. for thermalising, i.e. heating or cooling, the vehicle's interior volume.

In the following, possible features of embodiments of the invention and associated possible advantages will be described in more detail.

The photovoltaic arrangement may comprise one or preferably plural PV panels. Each PV panel typically comprises a plurality of solar cells, preferably high-efficiency solar cells such as wafer-based crystalline silicon solar cells. The solar cells may be integrated into the body parts of the vehicle. Overall, the PV arrangement may comprise a significant electricity generating capacity of for example more than 200 Wp, preferably more than 1 kWp. Generally, the higher the electricity generating capacity of the PV arrangement, the higher the technical and/or economical effect of the approach proposed herein may be, as for example more electricity may be used for thermalising the battery arrangement.

The battery arrangement may store electric energy generated by the PV arrangement. The electricity may be stored due to electrochemical reactions. The battery arrangement may comprise a plurality of battery cells electrically interconnected in series and/or in parallel. The battery cells may use lithium ion technology or a similar electricity storing technology. The battery arrangement may comprise a significant electricity storing capacity of for example more than 3 kWh, preferably more than 10 kWh or even more than 30 kWh. Generally, the higher the electricity storing capacity of the battery arrangement, the higher the technical and/or economical effect of the approach proposed herein may be, as the thermal mass of the battery arrangement generally increases with its electricity storing capacity.

The thermalising device is configured for using electric energy for generating thermal energy or for absorbing thermal energy in order to thereby heat or cool the battery arrangement. For example, the battery arrangement may comprise a fluid circuit through which a thermalised fluid may be conducted while being in thermal contact with battery cells of the battery arrangement. The fluid may be a gas such as air or a liquid such as water, oil or any other liquid thermalising agent having a thermal capacity being typically higher than in a gaseous fluid. The thermalising device may comprise a heat exchanger configured for exchanging thermal energy between the fluid in the fluid circuit and a heat generator or a heat absorber, respectively. The heat generator may be configured for generating heat by converting electric energy into thermal energy. The heat absorber may be configured for absorbing heat upon being operated by electric energy, applying for example similar physical effects such as in an air-conditioning system, a refrigerator or a heat pump.

The controller is electrically connected to the PV arrangement and may therefore control the electricity supply coming from the PV arrangement. Furthermore, the controller may be connected to the battery arrangement and/or to the thermalising device. The controller may directly or indirectly control electric energy exchange between the PV arrangement, the battery arrangement and the thermalising device. Generally, the controller comprises an electronic or microelectronic circuit for implementing its control strategy. The circuit may comprise a processor, data memory and/or one or several data interfaces. The controller may be programmable.

Conventionally, electricity generated by the PV arrangement is supplied to the battery arrangement in order to be temporarily stored in the battery arrangement. Furthermore, electric energy provided by a charging station connected to the grid may be used for charging the battery arrangement. The battery arrangement may then be used for supplying electricity for example to an electric motor of a drive train of the vehicle. Additionally or alternatively, the battery arrangement may supply electricity to other consumers internal or external to the vehicle. Furthermore, electricity supplied by the battery arrangement may be used for thermalising the battery arrangement using the thermalising device, as it is known that the battery arrangement shall generally not be operated at excessively low temperatures or excessively high temperatures but within a beneficial operating temperature range of for example between 0°C and 50°C, preferably between 10°C and 40°C.

However, it has been observed that, upon the battery arrangement not being capable of absorbing and storing electricity due to for example already being fully charged, electricity generated by the PV arrangement may conventionally no more be used in a beneficial manner.

In order to overcome such a dilemma, it is suggested herein to enable directly supplying electrical energy generated by the PV arrangement to the thermalising device for thermalising the battery arrangement.

Particularly, according to an embodiment, the electrical energy generated by the PV arrangement may be supplied to the thermalising device without being intermittently stored in the battery arrangement. In other words, instead of supplying the electric energy generated by the PV arrangement first to the battery arrangement and then supplying electric energy from the battery arrangement to other devices such as the thermalising device, thereby using the battery arrangement as a buffer, it is suggested to directly supplying the electricity from the PV arrangement to the thermalising device, thereby bypassing the battery arrangement. Accordingly, even in situations where the battery arrangement is already fully charged, electricity may be transmitted from the PV arrangement to the thermalising device for thermalising the battery arrangement.

According to an embodiment, the method further comprises analysing a state of charge of the battery arrangement. The electrical energy is then directly supplied to the thermalising device at least in situations of full charge of the battery arrangement. Thus, in situations where the battery arrangement may still absorb electricity due to not being fully charged, the controller may for example control electricity to be directly supplied to the battery arrangement to be stored therein. However, in situations where the battery arrangement is already fully charged, the controller may identify such fully charged state of charge and may then directly connect the PV arrangement to the thermalising device.

According to an alternative or additional embodiment, the method further comprises analysing an electrical interconnection status between the vehicle and an external electricity consumer. The electrical energy is then directly supplied to the thermalising device at least in situations of lacking interconnection to an external electricity consumer. Accordingly, in situations where the battery arrangement of the vehicle may not only be charged upon being connected to a charging station but may also supply electricity to external consumers, i.e. in a bidirectional electricity transfer scenario, the controller may for example control electricity to be directly supplied to an external consumer upon such consumer being connected to the of the vehicle. However, if it is detected that no external consumer is currently connected to the vehicle, the controller may directly connect the PV arrangement to the thermalising device.

Preferably, the controller is configured for directly connecting the PV arrangement to the thermalising device only in situations in which both of the before mentioned conditions apply, i.e. in a condition in which full charge of the battery arrangement is detected and a lacking interconnection to an external electricity consumer is detected.

According to embodiments, a temperature at an ambience of the vehicle and at an interior volume of the vehicle may be analysed. For such purpose, the controller may be connected for example to a temperature sensor. The temperature sensor may be arranged inside the vehicle in order to measure a temperature in the interior volume, i.e. for example in the cabin of the vehicle or in the battery arrangement comprised within the vehicle. Alternatively, the temperature sensor may be arranged outside the vehicle or at an outer surface of the vehicle in order to measure a temperature in the vehicle's ambience. The controller may then control an electricity transfer such that, when the analysed temperature is below a predefined lower temperature limit, the electrical energy is directly supplied to the thermalising device for preheating the battery arrangement. The predefined lower temperature limit may be for example 15°C or less, preferably 10°C or less. Particularly, the predefined lower temperature limit may correspond to a lower temperature limit of a temperature range in which the battery arrangement may be beneficially operated. Alternatively or additionally, the controller may control the electricity transfer such that, when the analysed temperature is above a predetermined upper temperature limit, the electrical energy is directly supplied to the thermalising device for precooling the battery arrangement. The predetermined upper temperature limit may be for example 25°C or more, preferably 30°C or more. Particularly, the predefined upper temperature limit may correspond to an upper temperature limit of a temperature range in which the battery arrangement may be beneficially operated. In other words, depending on an actual temperature within the vehicle or external to the vehicle being below or above an optimum operating temperature range being assumed to be beneficial for operating the battery arrangement, the electricity provided by the PV arrangement may be used for heating or cooling, respectively, the battery arrangement in order to thereby thermalising it towards its optimum operating temperature range.

According to an embodiment, the method may further comprise analysing a weather forecast. A decision about whether the electrical energy directly supplied to the thermalising device is used for heating the battery arrangement or is used for cooling the battery arrangement may then be made taking into account the weather forecast. In other words, upon deciding whether the energy supplied by the PV arrangement is to be used for heating the battery arrangement or, alternatively, is to be used for cooling the battery arrangement, alternative or additional to information about the actual temperature at or within the vehicle, information included in a weather forecast may be taken into account. Such weather forecast may for example indicate that in a near future, i.e. for example in the next minutes or in the next few hours, an ambient temperature may significantly rise or fall. Based on such information, it may for example be decided that the battery arrangement should be precooled in view of anticipated increasing temperatures or should be preheated in view of anticipated decreasing temperatures.

According to an embodiment, the method may further comprise thermalising an interior volume of the vehicle using a thermal exchange with the battery arrangement. Therein, it may be taken benefit from the fact that, generally, the battery arrangement comprises a very significant thermal mass. Typically, the battery arrangement of an electric vehicle has a weight of several dozens or hundreds of kilograms and comprises significant amounts of materials such as metals and/or electrolytes having a superior thermal capacity. Accordingly, thermalising the battery arrangement may not only help operating the battery arrangement in an optimised operating temperature environment but may also be used for temporarily storing thermal energy. Therein, "storing thermal energy" may be interpreted in thermalising the battery arrangement to a temperature range which is different from an initial temperature and/or which is different from an ambient temperature. Accordingly, due to such stored thermal energy, a thermal exchange with the battery arrangement may be used for thermalising for example the interior volume of the vehicle, i.e. for example the passenger cabin, in order to bring it to a comfortable temperature range. For example, at cool ambient temperatures, the battery arrangement may be preheated to elevated temperatures and the stored thermal energy may later be used for heating the vehicle's interior volume. Alternatively, at hot ambient temperatures, the battery arrangement may be precooled to lower temperatures and the stored "negative" thermal energy may later be used for air-conditioning and cooling the vehicle's interior volume. Therein, it may be used that for example a thermalising fluid circuit for heating or cooling the battery arrangement may be connected in thermal contact with a heating system and/or a cooling system for heating and cooling, respectively, the vehicle's interior volume. Particularly, such fluid circuit of the battery arrangement may be connected in thermal contact to a fluid circuit comprised in a heater for heating the vehicle cabin and/or to a fluid circuit comprised in an air-conditioning system for cooling the vehicle cabin.

The controller comprised in the vehicle may be implemented in hardware and/or software. Particularly, the controller may be programmable. For such purpose, the controller typically comprises a processor for processing instructions, a memory for storing the instructions and/or data, and/or one or more interfaces for communicating instructions and/or data.

The computer program product usable for programming the controller may be formulated in any suitable computer language.

The computer program product may be stored on a computer readable medium. The computer readable medium may be a portable medium such as a CD, a DVD, a flash memory, a ROM, a PROM, an EPROM or similar storage devices. Alternatively, the computer readable medium may be a stationary device such as another computer or server, such computer or server possibly being part of a data cloud, wherein the computer program may be downloaded from such computer or server via a network such as the Internet.

It shall be noted that possible features and advantages of embodiments of the invention are described herein partly with respect to a method for operating a vehicle including a PV arrangement and partly with respect to the vehicle itself. One skilled in the art will recognize that the features may be suitably transferred from one embodiment to another and features may be modified, adapted, combined and/or replaced, etc. in order to come to further embodiments of the invention.

### BRIEF DESCRIPTION OF THE DRAWINGS

In the following, advantageous embodiments of the invention will be described with reference to the enclosed drawing. However, neither the drawing nor the description shall be interpreted as limiting the invention.

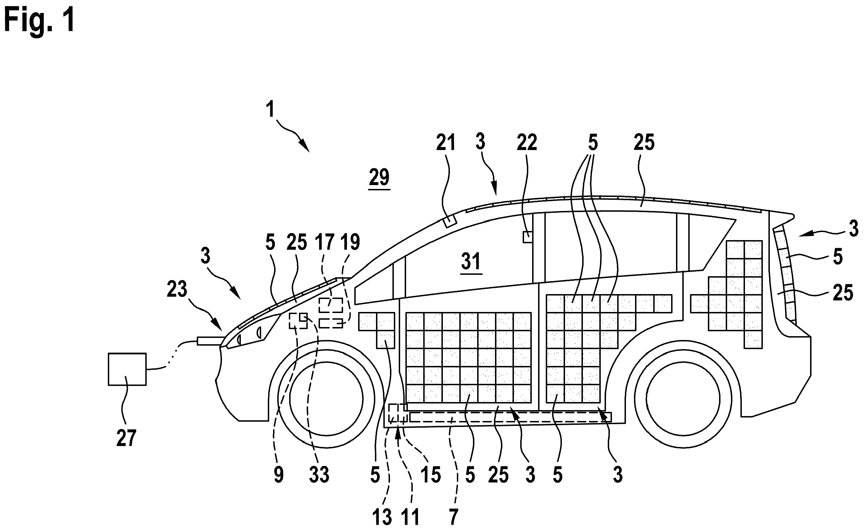

Fig. 1 shows a side view of a vehicle with a PV arrangement which is operated in accordance with an embodiment of the present invention.

The figure is only schematic and not to scale. Same reference signs refer to same or similar features.

### DESCRIPTION OF PREFERRED EMBODIMENTS

Fig. 1 shows a vehicle 1 including a PV arrangement 3 provided on various portions of a vehicle body 25. Specifically, various portions of the PV arrangement 3 are arranged along different surfaces of the vehicle body 25 and are incorporated in different vehicle body parts such as a roof, a hood, a hatch door, multiple side doors and/or mud guards. Each portion of the PV arrangement 3 comprises several PV cells 5. Preferably, the PV cells 5 are high efficiency solar cells such as wafer-based silicon solar cells typically having an efficiency of between 16% and 24%.

The vehicle 1 further comprises a battery arrangement 7 which is configured for storing electrical energy. In a conventional electric vehicle, such battery arrangement 7 generally stores the electric energy required for driving the vehicle, such electric energy being supplied for example by a grid via a sockets 23 included in the vehicle 1. In the solar electric vehicle described herein, the battery arrangement 7 may furthermore store electric energy generated by the PV arrangement 3. Accordingly, the battery arrangement 7 typically has a significant electricity storing capacity of for example many kilowatt-hours, in most cases between 5 kWh and 200 kWh. Therefore and as the battery arrangement 7 comprises heavy materials such as metals, electrolytes, etc., the battery arrangement 7 has a significant mass typically in a range of between dozens and hundreds of kilograms. Due to such mass and additionally taking into account that the materials comprised in the battery arrangement 7 generally have a significant thermal capacity, the entire battery arrangement 7 comprises a significant thermal mass such that large amounts of thermal energy may be stored in the battery arrangement 7 additionally to the electric energy stored therein by electrochemical reactions.

Battery cells comprised in the battery arrangement 7 should generally be operated in a preferred operating temperature range of for example 0°C to 50°C, preferably 10°C to 30°C. However, upon ambient temperatures being outside such operating temperature range or for example as a result of charging or discharging processes, the actual temperature of the battery arrangement 7 may tend to be outside the preferred operating temperature range. At excessively low temperatures, charging and/or discharging characteristics of the battery arrangement 7 may suffer. At excessively high temperatures, the battery arrangement 7 may suffer from damaging and potentially irreversible effects.

Accordingly, the vehicle 1 comprises a thermalising device 11. Such thermalising device 11 comprises a battery heating unit 13 and/or a battery cooling unit 15, in order to enable heating and/or cooling, respectively, the battery arrangement 7 such as to bring or maintain its temperature to the preferred operating temperature range.

During normal operation, i.e. as a main purpose, the PV arrangement 3 produces electrical energy upon being irradiated with solar irradiation and the generated electrical energy is stored in the battery arrangement 7 and may be used at a later point in time for driving the vehicle. As an additional or alternative option, electricity generated in the PV arrangement 3 may be supplied to further internal or external consumers 27. For example, the socket 23 may be implemented as a bidirectional electricity socket 23 via which electricity may not only be charged into the vehicle's battery arrangement 7 but electricity stored in the battery arrangement 7 may also be provided in the opposite direction to the external consumer 27.

However, in specific situations, i.e. for example when the battery arrangement 7 is already fully charged and furthermore no external electricity consumer 27 is connected to the vehicle 1, electricity generated by the PV arrangement 3 generally may not be used in a conventional solar electric vehicle.

In the approach described herein, it is therefore enabled to directly supply electrical energy generated by the PV arrangement 3 to the thermalising device 11 such that the thermalising device 11 may use this energy for thermalising the battery arrangement 7. Such direct supplying of electrical energy from the PV arrangement 3 to the thermalising device 11 may be controlled by a controller 9 comprising, inter alia, a processor 33. Additional to being electrically connected to the PV arrangement 3, such controller 9 may also be connected to the battery arrangement 7 in order to be capable to analysing the state of charge of the battery arrangement 7. Furthermore, the controller 9 may be connected to the socket 23 in order to be capable to analysing an electrical interconnection status between the vehicle 1 and the external electricity consumer 27. Additionally, the controller 9 is connected to the thermalising device 11 or at least controls a supply of electric energy from the photovoltaic arrangement 3 to the thermalising device 11.

In order to be able to decide whether the electrical energy provided by the PV arrangement 3 should be used for heating the battery arrangement 7 or for cooling the battery arrangement 7, various parameters at or in the vehicle 1 may be taken into account.

For example, a temperature in an ambience 29 of the vehicle 1 may be measured using an external temperature sensor 21. Additionally or alternatively, a temperature in an interior volume 31 of the vehicle 1 may be measured by an internal temperature sensor 22. Information about the internal and/or external temperature may be taken into account upon deciding whether the battery arrangement 7 shall be heated or cooled using the PV-generated electricity.

Furthermore, the vehicle 1 may comprise a data interface via which information of a weather forecast may be acquired. Such information may then be taken into account upon deciding whether the PV-generated electricity shall be used for heating or for cooling, respectively, the battery arrangement 7. For example, in a situation of cold ambient temperatures early in the morning but predicted high temperatures and solar irradiance in the hours to come, it may be advantageous to use the PV-generated energy for precooling the battery arrangement 7.

Having preheated or precooled, respectively, the battery arrangement 7 for example during a parking situation, the temperature difference between the battery arrangement 7 and an ambience induced thereby may be used at a later point in time, i.e. for example during a subsequent driving situation, for thermalising the interior volume 31 of the vehicle 1. For example, in cases of low ambient temperatures, the preheated battery arrangement 7 may be used for heating the interior volume 31 within the cabin of the vehicle 1 in order to improve a passenger's comfort. For such purpose, for example a cabin heating unit 17 may be thermally connected to the preheated battery arrangement 7. As an example, a thermalising circuit of the thermalising device 11 including a thermalising fluid for the battery arrangement 7 may be brought into thermal contact with the cabin heating unit 17, for example via a heat exchanger. Alternatively or additionally, in cases of high ambient temperatures and/or high solar irradiation, the precooled battery arrangement 7 may be used for cooling the interior volume 31 in the cabin of the vehicle 1. A cabin cooling unit 19 may therefore be thermally connected to the precooled battery arrangement 7. Again, the thermalising circuit of the thermalising device 11 may be brought into thermal contact with the cabin cooling unit 17.

As a brief summary, for example in situations of a fully charged battery arrangement 7 and a lacking external electricity consumer 27, electricity generated by the PV arrangements 3 may be used for thermalising the battery arrangement 7 into an optimum operation temperature range and/or for utilizing the thermal mass of the battery arrangement 7 for storing thermal energy which may e.g. later be used for heating or cooling an interior volume 31 of the vehicle 1.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### LIST OF REFERENCE SIGNS

- 1: vehicle
- 3: PV arrangement
- 5: PV cells
- 7: battery arrangement
- 9: controller
- 11: thermalising device
- 13: battery heating unit
- 15: battery cooling unit
- 17: cabin heating unit
- 19: cabin cooling unit
- 21: external temperature sensor
- 22: internal temperature sensor
- 23: bidirectional electricity socket
- 25: vehicle body
- 27: external consumer
- 29: ambience
- 31: interior volume
- 33: processor

## Claims

1. Method for operating a vehicle (1),
wherein the vehicle (1) includes:
- a photovoltaic arrangement (3) provided on a vehicle body (25),
- a battery arrangement (7) configured for storing electrical energy generated by the photovoltaic arrangement (3), and
- a thermalising device (11) configured for heating and/or cooling the battery arrangement (7),
the method comprising:
directly supplying electrical energy generated by the photovoltaic arrangement (3) to the thermalising device (11) for thermalising the battery arrangement (7).

2. Method according to claim 1,
wherein the electrical energy is supplied to the thermalising device (11) without being intermittently stored in the battery arrangement (7).

3. Method according to one of the preceding claims,
wherein the method further comprises analysing a state of charge of the battery arrangement (7),
wherein the electrical energy is directly supplied to the thermalising device (11) at least in situations of full charge of the battery arrangement (7).

4. Method according to one of the preceding claims,
wherein the method further comprises analysing an electrical interconnection status between the vehicle (1) and an external electricity consumer (27),
wherein the electrical energy is directly supplied to the thermalising device (11) at least in situations of lacking interconnection to an external electricity consumer (27).

5. Method according to one of the preceding claims,
wherein the method further comprises analysing a temperature at at least one of an ambience (29) of the vehicle (1) and an interior volume (31) of the vehicle (1), wherein, when the temperature is below a predefined temperature limit, the electrical energy is directly supplied to the thermalising device (11) for preheating the battery arrangement (7).

6. Method according to claim 5,
wherein the predefined temperature limit is at most 15°C.

7. Method according to one of the preceding claims,
wherein the method further comprises analysing a temperature at at least one of an ambience (29) of the vehicle (1) and an interior volume (31) of the vehicle (1), wherein, when the temperature is above the predefined temperature limit, the electrical energy is directly supplied to the thermalising device (11) for precooling the battery arrangement (7).

8. Method according to one of the preceding claims,
wherein the predefined temperature limit is at least 25°C.

9. Method according to one of the preceding claims,
wherein the method further comprises analysing a weather forecast,
wherein a decision about whether the electrical energy directly supplied to the thermalising device (11) is used for heating the battery arrangement (7) or is used for cooling the battery arrangement (7) is made taking into account the weather forecast.

10. Method according to one of the preceding claims,
wherein the method further comprises thermalising an interior volume (31) of the vehicle (1) using a thermal exchange with the battery arrangement (7).

11. Vehicle (1) comprising:
- a photovoltaic arrangement (3) provided on a vehicle body (25),
- a battery arrangement (7) configured for storing electrical energy generated by the photovoltaic arrangement (3),
- a thermalising device (11) configured for heating and/or cooling the battery arrangement (7), and
- a controller (9) electrically connected to the photovoltaic arrangement (3),
wherein the controller (9) is configured for at least one of implementing and controlling the method according to one of the preceding claims.

12. Computer program product including instructions which, when executed by a processor (33), instruct the processor (33) to at least one of implementing and controlling the method according to one of claims 1 to 10.

13. Computer readable medium comprising stored thereon the computer program product according to claim 12.
